# EUROPEAN PATENT APPLICATION

(11) **EP 2 677 487 A1**
(43) Date of publication of application: **25.12.2013**
(21) Application number: 12746671.2
(22) Date of filing: 07.02.2012
(51) Int. Cl.: G06Q 50/14, G06Q 50/10

(54) **OPERATOR SELECTION DEVICE, OPERATOR SELECTION PROGRAM, AND OPERATOR SELECTION METHOD**

(30) Priority: 15.02.2011 JP 2011030083
(71) Applicant: Fujitsu Limited, Kawasaki-shi, Kanagawa 211-8588 (JP)
(72) Inventor: FUKUMA, Mikio, Tokyo 113-0021 (JP); KAWASAKI, Mitsuhiro, Tokyo 113-0021 (JP)
(74) Representative: HOFFMANN EITLE
(86) International application number: PCT/JP2012/052781
(87) International publication number: WO 2012/111489

(57) **Abstract**

An operator selecting device (10) includes an itinerary storage unit (13a) that stores therein areas that a user is scheduled to visit in association with each user identifying information that identifies the user. The operator selecting device (10) includes a used language storage unit (13b) that stores therein a language used in an area in association with each area. The operator selecting device (10) includes a handling language storage unit (14a) that stores therein a language an operator can handle in association with each operator. The operator selecting device (10) identifies, when an inquiry including user identifying information is received from a terminal (30), a language used in an area that the user stored in the itinerary storage unit (13a) in association with the user identifying information is scheduled to visit thereafter by referring to the used language storage unit (13b). The operator selecting device (10) selects an operator who can handle a language used in the current area of stay of a user and a language used in an area that the user is scheduled to visit thereafter.

## Description

### [Technical Field]

The embodiment discussed herein is directed to an operator selecting device, an operator selecting program, and an operator selecting method.

### [Background Art]

Tour help desks that handle inquiries about tours from users are known. The tour help desks also provide a service in which an operator who is at a remote place supports a user who is at a local place where he/she is touring by telephone. As an example, the operator helps the user bring a solution to trouble that has occurred at a place where he/she is touring by communicating with a local person in place of the user, or the operator guides tourist spots of a place where the user is present.

An example of a technique in which an operator supports a user in this manner may be a tourist guidance system in which the current positions of portable terminals distributed to tourists who take part in a tour, tourist spot information, and personal information are allowed to be displayed on an operating terminal used by the operator.

### [Citation List]

### [Patent Literature]

Patent Literature 1: Japanese Laid-open Patent Publication No. 2003-44499

### [Summary of invention]

### [Technical Problem]

However, it is difficult to support a solution to trouble smoothly in the above prior art when the user takes an itinerary making a tour of a plurality of areas.

For example, when a user having an illness who consulted with an operator on the illness in France consults on the illness again in Germany, which is a movement destination, languages used in France, which is a place before movement, and Germany, which is a place after movement, are different. For this reason, when a consultation on the illness is received from the user who has moved to Germany, the above tourist guidance system may assign a different operator from the operator who took charge of the user when the user stayed in France to the user. When different operators are thus assigned in different areas, the user needs to explain the details of the consultation to the operator assigned in Germany again, or a handling task needs to be taken over from the operator to the other. As such, it is difficult to support a solution to the trouble about the illness of the user smoothly in the above tourist guidance system.

The disclosed technique has been achieved in view of the above circumstances, and an object thereof is to provide an operator selecting device, an operator selecting program, and an operator selecting method that can support a solution to trouble smoothly.

### [Solution to Problem]

An operator selecting device disclosed by the present invention includes an itinerary storage unit that stores therein areas that a user is scheduled to visit in association with each user identifying information that identifies the user. The operator selecting device includes a used language storage unit that stores therein a language used in an area in association with each area. The operator selecting device includes a handling language storage unit that stores therein a language an operator can handle in association with each operator. The operator selecting device includes an identifying unit that identifies, when an inquiry including user identifying information is received from a terminal used by a user, a language used in an area that the user stored in the itinerary storage unit in association with the user identifying information is scheduled to visit thereafter by referring to the used language storage unit. The identifying unit identifies a language used in an area that the user is scheduled to visit thereafter. The operator selecting device further includes a selecting unit that selects an operator who can handle a language used in the current area of stay of a user and a language identified from the handling language storage unit by the identifying unit.

### [Advantageous Effects of Invention]

An embodiment of the operator selecting device disclosed by the present invention provides the effect of supporting a solution to trouble smoothly.

### [Brief Description of Drawings]

FIG. 1 is a diagram illustrating the configuration of a help desk system according to a first embodiment.
FIG. 2 is a block diagram illustrating a functional configuration of an operator selecting device according to the first embodiment.
FIG. 3 is a diagram indicating a configuration example of information stored in a continuity storage unit.
FIG. 4 is a diagram indicating a configuration example of information stored in a handling history storage unit.
FIG. 5 is a diagram indicating a configuration example of information stored in an itinerary storage unit.
FIG. 6 is a diagram indicating a configuration example of information stored in a used language storage unit.
FIG. 7 is a diagram indicating a configuration example of information stored in a handling language storage unit.
FIG. 8 is a diagram indicating a configuration example of information stored in a skill storage unit.
FIG. 9 is a diagram indicating a registration example of a handling history.
FIG. 10 is a flowchart indicating the procedure of operator selecting processing according to the first embodiment.
FIG. 11 is a diagram for describing an example of a computer that executes an operator selecting program according to the first embodiment and a second embodiment.

### [Embodiments for Carrying Out the Invention]

The following describes embodiments of an operator selecting device, an operator selecting program, and an operator selecting method disclosed by the present invention in detail based on the drawings. The embodiments do not limit the disclosed technique. The embodiments can be appropriately combined to the extent that their processing details do not contradict each other.

### First Embodiment

### System Configuration

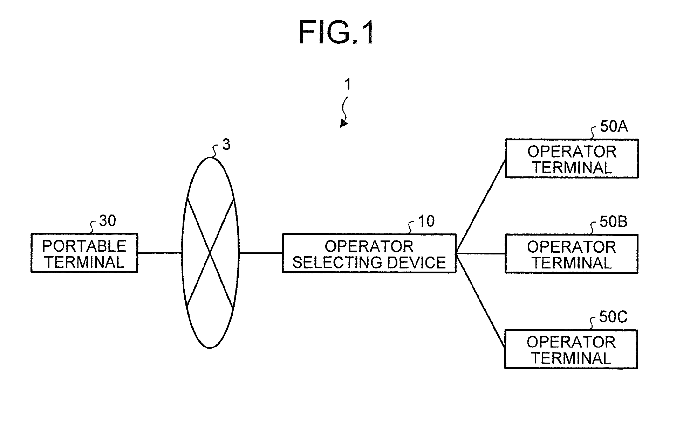

First, described is the configuration of a help desk system according to a first embodiment. FIG. 1 is a diagram illustrating the configuration of a help desk system according to the first embodiment. This help desk system 1 illustrated in FIG. 1 houses a portable terminal 30, an operator terminal 50A to an operator terminal 50C, and an operator selecting device 10. The example of FIG. 1 supposes a case where the operator selecting device 10 selects an operator terminal to which an inquiry about a tour received through the portable terminal 30 from a user is assigned out of the operator terminal 50A to the operator terminal 50C used by operators.

The portable terminal 30 and the operator selecting device 10 are connected through a network 3 in a communicable manner. As an embodiment of the network 3, regardless of whether being wired or wireless, communication networks such as the Internet, a local area network (LAN), and a virtual private network (VPN) may be employed. Although the example of FIG. 1 exemplifies a case where the operator selecting device 10 and the operator terminal 50A to the operator terminal 50C are connected directly, both parts may be connected through a network.

Although the example of FIG. 1 illustrates one portable terminal, one operator selecting device, and three operator terminals, the disclosed system is not limited to the illustrated configuration. In other words, the help desk system 1 only needs to house at least a plurality of operator terminals and may house any number of portable terminals and operator selecting devices. When the operator terminal 50A to the operator terminal 50C are described without being discriminated from each other below, they may be represented as the "operator terminal 50."

The portable terminal 30 is a terminal device carried by a user. As an embodiment of the portable terminal 30, mobile terminals such as a cellular phone, a personal handyphone system (PHS), and a personal digital assistant (PDA) may be employed. As another embodiment, stationary terminals such as a personal computer (PC) may be employed. The portable terminal 30 may be possessed by the user or may be a portable terminal rented from a travel agency to the user.

As an example, an application program for clients for receiving a help desk service provided by a travel agency or the like can be installed or preinstalled in the portable terminal 30. The application program for clients for receiving a help desk service may be called the "tourist support application for clients" below.

The tourist support application for clients thus installed in the portable terminal 30, when it is started by the user's operation, receives the type of details about which an inquiry is made to a help desk operated by a travel agency or the like. An example of the inquiry may be an inquiry about an itinerary, that is, a "tour plan" for which the user applied to a travel agency. For example, the user can apply for addition and change of an optional tour or the like. Another example may be an inquiry about "trouble" occurred in the user at a place where he/she is touring. For example, the user can select inquiries about illness, shopping, reservation, police, disaster, or the like, as examples of the trouble. Still another example may be an inquiry for requesting quick support when a threat to the life of the user occurs.

The tourist support application for clients transmits user identifying information that identifies the user and the position information of the portable terminal 30 as well as a type code indicating the type of the inquiry received from the user to the operator selecting device 10 described below. As an example of the user identifying information, a membership number provided by a help desk of a travel agency may be transmitted. In addition to the membership number, the disclosed system may also employ the telephone number or the ID number of a subscriber identity module (SIM) card of the portable terminal 30 as the user identifying information. As an example of the position information, a latitude and a longitude measured by a global positioning system (GPS) receiver incorporated into the portable terminal 30 may be transmitted. The disclosed system may also employ a place name or the like input by the user as the position information.

As described above, an inquiry including the type code of the inquiry, the membership number, and the position information is transmitted by the tourist support application for clients installed in the portable terminal 30 to the operator selecting device 10 described below. Although a case where the tourist support application for clients is installed in the portable terminal 30 is exemplified here, the disclosed system is not limited thereto. For example, by allowing the user to access a Web site of the help desk set up by the travel agency using a browser function of the portable terminal 30, the inquiry including the type code of the inquiry, the membership number, and the position information may be transmitted to the operator selecting device 10.

Although a method for uploading the coordinate values of the latitude and the longitude measured by the GPS receiver to the operator selecting device 10 described below as the position information is exemplified here, the operator selecting device 10 may acquire the position information of the user using other methods.

As another embodiment, the operator selecting device 10 may identify the current position of the user from a date and time when a phone call was received from the user and an itinerary of the user. Specifically, the operator selecting device 10, when a phone call from an external communication terminal to the telephone number of a help desk set up in advance is received, acquires the telephone number of the originating communication terminal from number notification by the communication terminal. In addition to this, the operator selecting device 10 determines whether the telephone number of the originating communication terminal is the telephone number of a certain member who was registered in the help desk of the travel agency in advance. If the telephone number of the originating communication terminal is the telephone number of the certain member, it can be confirmed that the transmitter is a member who applied to the travel agency. In this case, the operator selecting device 10 refers to itinerary data associated with the membership number given to the member out of itinerary data, that is, data in which tour schedules and places of stay are associated with each other stored in an itinerary storage unit 13a described below. The operator selecting device 10 then acquires a place of stay corresponding to the transmission date and time of the phone call by the member. The place of stay thus acquired may be used as the position information of the user. In particular, when the user makes a tour of an area that possesses a plurality of wide administrative districts, a movement beyond the border of the administrative districts rarely occurs even if the user gets lost in a local place and wanders around the local place. The position information can therefore be acquired with high accuracy by making a comparison between the received date and time of the phone call and the itinerary.

Although a case where the position information of the user is acquired using the portable terminal 30 possessed by the user is exemplified here, the position information of the user is not always acquired by the portable terminal 30, and any communication terminal that can be used in a local place that the user is staying may be used. Examples of the communication terminal may include the portable terminal 30 possessed by the user, a public telephone in the local place, and a portable terminal or a fixed-line telephone rented from a local person to the user.

When these communication terminals are used for the acquisition of the position information, as an example, an operator who gets the current position out of the user may be employed apart from an operator of the help desk who receives consultations about a tour. Specifically, the operator who gets the current position out of the user is arranged on a first line, and the operator of the help desk is arranged on a second line. Then before selecting the second line operator, the first line operator may be allowed to input a place of stay gotten out of the user into an operator terminal that is used by the first line operator as the position information of the user. In this situation, the first line operator may be allowed to perform a membership check about whether the transmitter who made a phone call to the telephone number set up in the help desk is a member together with the check of the place of stay and may be allowed to input the membership number and the position information. The operator selecting device 10 can thus acquire the membership number and the position information of the user from the first line operator terminal.

As another example of the acquisition of the present information using the above communication terminals, when the transmitter who makes a phone call to the telephone number set up in the help desk uses a communication terminal such as a public telephone and a fixed-line telephone in the local place, the current position may be identified based on number notification from the communication terminal. For example, the operator selecting device 10 makes a comparison between a country code and an area code included in the number notification from the communication terminal and a correspondence relation table in which correspondence relations between country codes and area codes and country names and area names are defined. The operator selecting device 10 thereby extracts a "country name" and an "area name" corresponding to the country code and the area code in the number notification. The thus extracted country name and area name may be used as the position information of the user.

The operator selecting device 10 is a computer that provides a service for selecting the operator terminal 50 that is allowed to handle an inquiry from the portable terminal 30 out of the operator terminal 50A to the operator terminal 50C.

The operator selecting device 10 according to the present embodiment includes an itinerary storage unit that stores therein areas that a user is scheduled to visit in association with each user identifying information that identifies the user. The operator selecting device 10 according to the present embodiment further includes a used language storage unit that stores therein a language used in an area in association with each area. The operator selecting device 10 according to the present embodiment further include a handling language storage unit that stores therein a language an operator can handle in association with each operator. The operator selecting device 10 according to the present embodiment, when an inquiry including user identifying information is received from the portable terminal 30, identifies a language used in an area that the user stored in the itinerary storage unit in association with the user identifying information is scheduled to visit thereafter by referring to the used language storage unit. The operator selecting device 10 according to the present embodiment then selects an operator who can handle a language used in the current area of stay of the user and a language used in the area that the user is scheduled to visit from the handling language storage unit.

Thus, the operator selecting device 10 according to the present embodiment, when the inquiry received from the user, identifies a language group that is expected to be used from the itinerary of the user and assigns an operator who can handle the identified language group as a person in charge of the inquiry. As a result, the operator selecting device 10 according to the present embodiment can allow the same operator to handle the inquiry from the user even when the user takes an itinerary making a tour of a plurality of areas. In the operator selecting device 10 according to the present embodiment, therefore, the user does not need to explain the details of a consultation about which the user held before moving between areas to an operator at an area after movement again, or a handling task does not need to be taken over from one operator to another. Consequently, the operator selecting device 10 according to the present embodiment can support a solution to trouble smoothly.

Thereafter, the operator selecting device 10 directs the operator terminal 50 that is used by the operator selected as described above to establish a call connection with the inquiring portable terminal 30.

The operator terminal 50 is a terminal device that is used by an operator who belongs to the help desk. As an example, the operator terminal 50, when a direction about a call connection is received from the operator selecting device 10, starts up software for IP telephone use that is installed or preinstalled and performs control to establish a call connection with the portable terminal 30. The operator then talks with a user or a person with whom the user wishes to communicate through a headset or handset connected to the operator terminal 50 by wire or wirelessly. In this situation, the user and the operator may talk with each other by videophone using a camera incorporated into the portable terminal 30 and a Web camera attached to the operator terminal 50. Upon completion of an inquiry through such a talk, the operator terminal 50 receives the inputting of a handling history including handling details for the inquiry and a time spent for the handling from the operator and transmits the received handling history to the operator selecting device 10. As the software for IP telephone use, software of the peer to peer (P2P) type may be employed, or software of the session initiation protocol (SIP) type may also be employed.

### Configuration of Operator Selecting Device

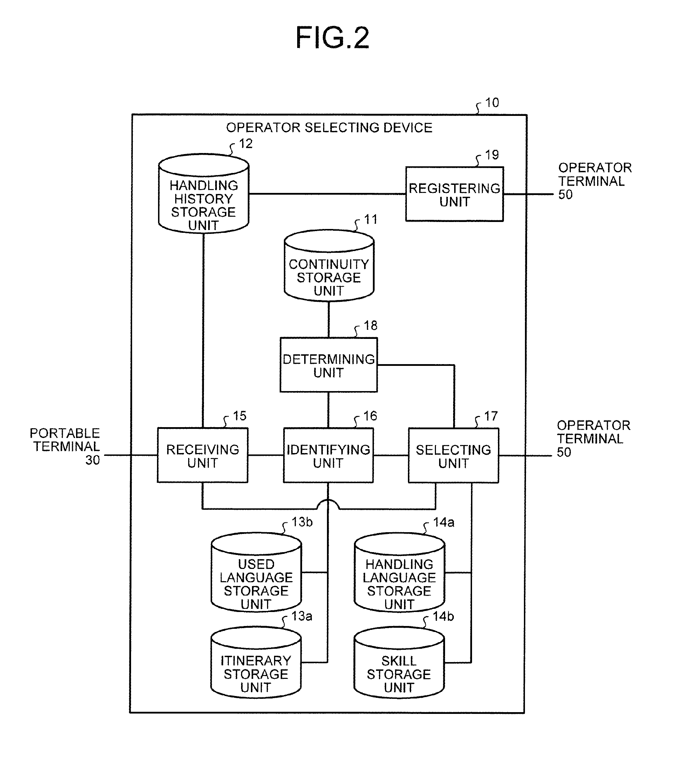

Described next is the configuration of the operator selecting device 10 according to the present embodiment. FIG. 2 is a block diagram illustrating a functional configuration of the operator selecting device 10 according to the first embodiment. As illustrated in FIG. 2, the operator selecting device 10 includes a continuity storage unit 11, a handling history storage unit 12, the itinerary storage unit 13a, a used language storage unit 13b, a handling language storage unit 14a, and a skill storage unit 14b. Furthermore, the operator selecting device 10 includes a receiving unit 15, an identifying unit 16, a selecting unit 17, a determining unit 18, and a registering unit 19. Apart from the functional units illustrated in FIG. 2, the operator selecting device 10 includes various types of functional units a known computer includes, for example, functions of various types of input devices and voice output devices.

Among them, the continuity storage unit 11 is a storage unit that stores therein the presence or absence of the continuity of an inquiry in association with each type of the inquiry. As an example, the continuity storage unit 11 is referred to by the determining unit 18 described below, in order to determine, when the same type of inquiry has been received again, whether it is appropriate to allow the same operator to take charge of the inquiry.

An embodiment of the continuity storage unit 11 may employ data in which type code, type 1, type 2, type 3, the presence or absence of continuity, remarks, or the like of an inquiry are associated with each other. "Type code" here indicates a code for discriminating the type of an inquiry. "Type 1," "type 2," and "type 3" indicate categories when the types of inquiries are classified, where the larger the attached number, the more detailed category is indicated. The "presence or absence of continuity" indicates whether, when the same type of inquiries are received multiple times, details handled by then are useful for being handled continuously thereafter.

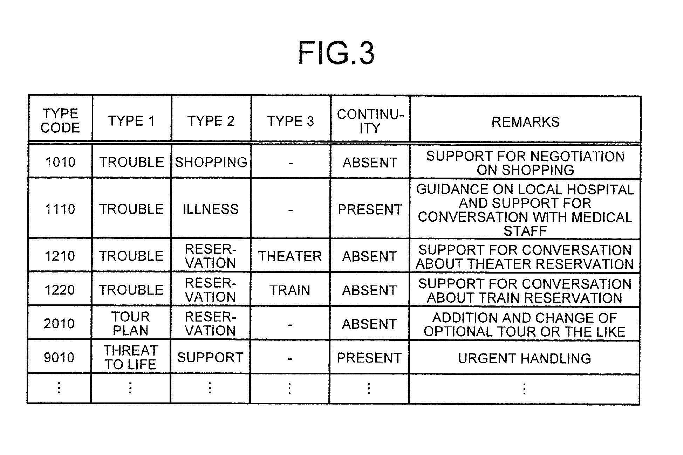

FIG. 3 is a diagram indicating a configuration example of information stored in the continuity storage unit 11. The example of FIG. 3 indicates that an inquiry with a type code of "1010" is classified as "shopping" such as support for negotiation on shopping in "trouble." It also indicates that an inquiry with a type code of "1210" is classified as "reservation" in "trouble" and is further among them classified as "theater" such as support for conversation about theater reservation. Furthermore, it also indicates that an inquiry with a type code of "1220" is classified as "reservation" in "trouble" and is further among them classified as "train" such as support for conversation about train reservation. For these pieces of support for conversation about theater reservation and train reservation, even when another inquiry occurs, it is likely that negotiations about different articles, events, or vehicles are requested. For this reason, difference in handling is hard to occur even with handling by different operators. For the inquiry with a type code of "1010," therefore, "absent" is set for the continuity.

It indicates that an inquiry with a type code of "1110" is a type about "illness" such as guidance on local hospitals and support for conversation with medical staff in "trouble." For the support for conversation with medical staff, the condition of an illness a user has and a medical history until then need to be conveyed every time the user is examined and treated by different medical staff. For the inquiry with a type code of "1110," therefore, "present" is set for the continuity. In addition, though not illustrated, also in the case of "lost" in "trouble" in which a user receives lost luggage at an area after movement, an operator needs to grasp the circumstances about the loss and the details of a lost article and explain the circumstances to airport staff in an area before movement and airport staff in an area after movement. For also an inquiry about such a loss-related trouble, "present" is set for the continuity.

An inquiry with a type code of "2010" is classified as "tour plan" and is among them classified as "reservation" such as addition and change of an optional tour. For the addition and change of an optional tour, difference in handling is hard to occur even with handling by different operators. For the inquiry with a type code of "2010," therefore, "absent" is set for the continuity.

It indicates that an inquiry with a type code of "9010" is "support" related to "a threat to life" for which an urgent handling by local staff is needed. For "support" related to "a threat to life," the user needs to be watched carefully until the threat disappears. For the inquiry with a type code of "9010," therefore, "present" is set for the continuity.

The handling history storage unit 12 is a storage unit that stores therein a history of inquiries from users handled by operators. As an example, the handling history storage unit 12 is referred to by the receiving unit 15 described below, in order to assign the same operator again as the operator selected in the past by the selecting unit 17 described below, when the same type of inquiry is received from the portable terminal 30. A handling history stored in the handling history storage unit 12 may be deleted after the end of the itinerary concerning the handling history.

An embodiment of the handling history storage unit 12 may employ data in which membership number, itinerary number, date and time, handling time, handling operator, type code, the presence or absence of continuity, handling details, or the like are associated with each other. "Membership number" here indicates a number given to a user as a member from the help desk of the travel agency. "Date and time" indicates a date and time when handling for an inquiry from the user was started by an operator. "Handling operator" indicates an operator who handled the inquiry from the user. "Handling details" indicate the details from the user handled.

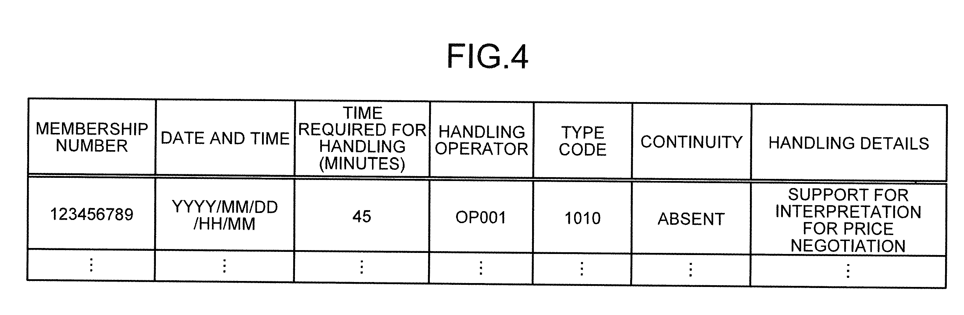

FIG. 4 is a diagram indicating a configuration example of information stored in the handling history storage unit 12. The example of FIG. 4 indicates that an operator with an operator ID of "OP001" handled an inquiry with a type code of "1010," that is, support for negotiation on shopping from a user with a membership number of "123456789" at a date and time of "YYYY/MM/DD/HH/MM" for 45 minutes. For the type code "1010" of the handling, "absent" is set for the continuity. Even when an inquiry with a type code of "1010" is received again, therefore, the operator with an operator ID of "OP001" will not be necessarily assigned.

The itinerary storage unit 13a is a storage unit that stores therein areas that a user is scheduled to visit. As an example, the itinerary storage unit 13a is referred to by the identifying unit 16 described below, in order to identify the areas that the user is scheduled to visit. An embodiment of the itinerary storage unit 13a may employ an itinerary, that is, data in which process, departure point, departure date and time, destination, arrival date and time, means of transportation, place of stay, or the like are associated with each other by user. The above "process" indicates stages along which a user moves through areas on a tour, where the more the process advances, the later the moving order.

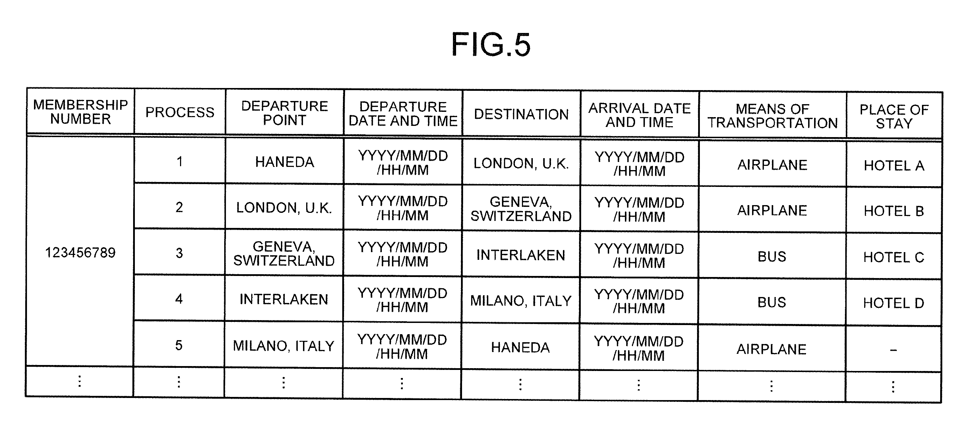

FIG. 5 is a diagram indicating a configuration example of information stored in the itinerary storage unit 13a. The example of FIG. 5 indicates that an itinerary passing through Haneda, Japan; London, the United Kingdom; Geneva, Switzerland; Interlaken, Switzerland; and Milano, Italy and returning back to Haneda is applied by a user with a membership number of "123456789" to the travel agency. The example of FIG. 5 also indicates that the section between Haneda and London, the section between London and Geneva, and the section between Milano and Haneda are moved by airplane, and the section between Geneva and Interlaken and the section between Interlaken and Milano are moved by bus. Furthermore, the example of FIG. 5 indicates that the user stays at Hotel A in London, stays at Hotel B in Geneva, stays at Hotel C in Interlaken, and stays at Hotel D in Milano.

The used language storage unit 13b is a storage unit that stores therein languages used in various areas. As an example, the used language storage unit 13b is referred to by the identifying unit 16 described below, in order to identify a language group that is expected to be used from the itinerary of the user.

An embodiment of the used language storage unit 13b may employ data in which used languages such as a first language, second language, and third language are associated with each area defined by area classification 1 and area classification 2. "Area classification 1" here indicates a classification the world is divided into countries, and "area classification 2" indicates a classification countries are divided into cities. Furthermore, "first language" indicates the most frequently used language in a given area, "second language" indicates the second most frequently used language in a given area, and "third language" indicates the third most frequently used language in a given area. Although a case where the classification is performed down to local cities in defining the area is exemplified here, the classification may be held at the countries or performed further in detail.

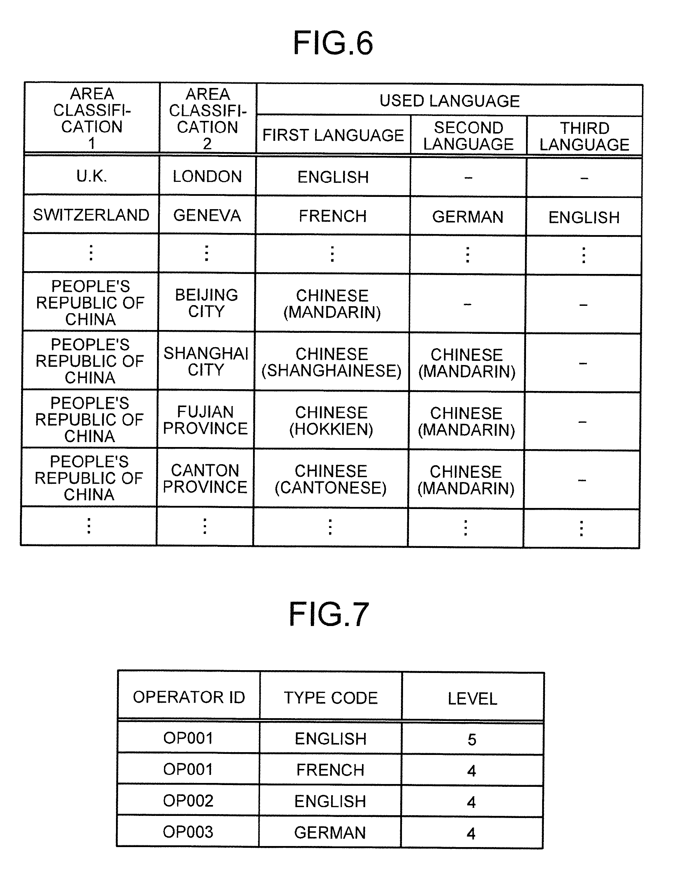

FIG. 6 is a diagram indicating a configuration example of information stored in the used language storage unit 13b. In the example of London, the United Kingdom, indicated in FIG. 6, only the first language is entered, and there are no entries in the second language and third language. This indicates that English is most frequently used, and other languages are less frequently used. The example of Geneva of Switzerland indicated in FIG. 6 indicates that French, German, and English are more frequently used in this order. Although the example of FIG. 6 indicates the examples of London and Geneva, the first language, second language, and third language of other countries and cities are supposed to be registered.

Furthermore, the example of Republic of China indicated in FIG. 6 indicates that the first language differs by local city. In other words, it indicates that in Beijing City, Shanghai City, Fujian Province, and Canton Province, Pekingese, Shanghainese, Hokkien, and Cantonese, which are the dialects of the respective local cities, are most frequently used, respectively, and Mandarin, which is used as the common language or the standard language in Republic of China, is second most frequently used. Thus, the first language is not necessarily common even in the same country, and a highly frequently used language may differ by area even in the same country. For example, when a user is supposed to take an itinerary bound for Beijing City from Shanghai City, if an inquiry with continuity is made by the user, it is preferable that an operator who can handle both Shanghainese and Mandarin be selected. In this situation, if there is no operator who can handle both Shanghainese and Mandarin, it is preferable that an operator who can handle at least Mandarin and can handle either one of Shanghainese and Pekingese be selected. If there is no operator who can handle either one of Shanghainese and Pekingese, it is preferable that an operator who can handle Mandarin be selected.

The handling language storage unit 14a is a storage unit that stores therein a language the operators who belong to the help desk can handle. As an example, the handling language storage unit 14a is referred to by the selecting unit 17 described below, in order to select an operator who can handle a language that is expected to be used from the itinerary of the user. An embodiment of the handling language storage unit 14a may employ data in which operator ID, language, and level are associated with each other. The above "level" is an indicator that indicates the ability to handle conversation performed by an operator using a language, where the higher the level, the higher the ability to handle conversation using the language. As an example, a case is supposed below where the language level is indicated by five levels of "1" to "5," and when the level is "3" or more, it is regarded that an operator can handle the language.

FIG. 7 is a diagram indicating a configuration example of information stored in the handling language storage unit 14a. The example of FIG. 7 indicates that the level of English of an operator with an operator ID of "OP001" is "5" and the level of French thereof is "4." It also indicates that the level of English of an operator with an operator ID of "OP002" is "4." It further indicates that the level of German of an operator with an operator ID of "OP003" is "4."

Thus, the example of FIG. 7 indicates that the operator with an operator ID of "OP001" can handle both English and French, that the operator with an operator ID of "OP002" can handle English, and that the operator with an operator ID of "OP003" can handle German. Although the example of FIG. 7 indicates only languages with a level of "3" or more, any language with a level of less than "3" may be registered. Although the example of FIG. 7 indicates the language levels about the three operators with operator IDs of "OP001," "OP002," and "OP003," the language levels of all the operators who belong to the help desk are supposed to be registered.

The skill storage unit 14b is a storage unit that stores therein the type of an inquiry an operator can handle, that is, a skill. As an example, the skill storage unit 14b is referred to by the selecting unit 17 described below, in order to select an operator whose skill handling the type of an inquiry from a user is higher out of operators who have been narrowed down by a language used in an area where the user is currently positioned. An embodiment of the skill storage unit 14b may employ data in which operator ID, type code, and level are associated with each other. The above "level" is an indicator indicating the ability of an operator to handle an inquiry, where the higher the level, the higher the skill in type of the inquiry. As an example, a case is supposed below where the level of handling for the type codes is indicated by five levels of "1" to "5," and when the level is "3" or more, it is regarded that an operator can handle the inquiry, that is, has a skill in the type of the inquiry.

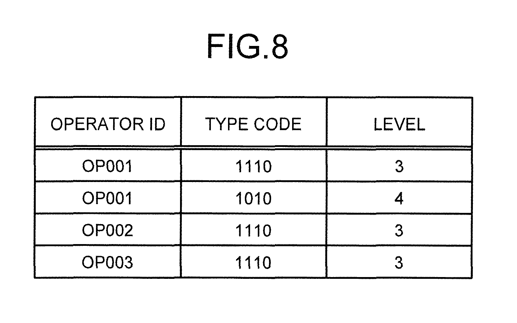

FIG. 8 is a diagram indicating a configuration example of information stored in the skill storage unit 14b. The example of the operator with an operator ID of "OP001" indicated in FIG. 8 indicates that the level of a type code of "1110," that is, a skill in support for guidance on local hospitals or support for conversation with medical staff is "3." The example of the operator with an operator ID of "OP001" indicated in FIG. 8 indicates that the level of a type code of "1010," that is, a skill in support for negotiation on shopping is "4." The example of the operator with an operator ID of "OP002" indicated in FIG. 8 indicates that the level of a type code of "1110," that is, a skill in support for guidance on local hospitals or support for conversation with medical staff is "3." The example of the operator with an operator ID of "OP003" indicated in FIG. 8 indicates that the level of a type code of "1110," that is, a skill in support for guidance on local hospitals or support for conversation with medical staff is "3."

Thus, the example of FIG. 8 indicates that the operator with an operator ID of "OP001" has a skill in "shopping" and "illness" and that the operators with operator IDs of "OP002" and "OP003" have a skill in "illness." Although the example of FIG. 8 indicates only skills whose level is "3" or more, any skill whose skill is less than "3" may be registered. Although the example of FIG. 8 indicates the levels of the skills about the three operators with operator IDs of "OP001," "OP002," and "OP003," the levels of the skills of all the operators who belong to the help desk are supposed to be registered.

Semiconductor memory elements and memory devices may be used for the storage units of the continuity storage unit 11, the handling history storage unit 12, the itinerary storage unit 13a, the used language storage unit 13b, the handling language storage unit 14a, and the skill storage unit 14b. Examples of the semiconductor memory elements may include a video random access memory (VRAM), a random access memory (RAM), a read only memory (ROM), and a flash memory. Examples of the memory devices may include memory devices such as a hard disk and an optical disk.

Returning back to the description of FIG. 2, the receiving unit 15 is a processing unit that receives an inquiry of a user from the portable terminal 30. To describe this, the receiving unit 15, when the inquiry of the user is received from the portable terminal 30, searches the handling history storage unit 12 for a handling history having the same membership number and type code as a membership number and type code included in the inquiry. The receiving unit 15 searches for handling histories in a period during which the itinerary stored in the itinerary storage unit 13a in association with the membership number included in the inquiry is scheduled out of the handling histories stored in the handling history storage unit 12. If the handling history having the same membership number and type code is present in the handling history storage unit 12, the receiving unit 15 determines whether "present" is registered for the continuity of the handling history. In this situation, if "present" is registered for the continuity of the handling history, it can be estimated that the same operator as the operator who took charge of the inquiry previous time is allowed to take charge of the inquiry continuously. In this case, the receiving unit 15 outputs the operator ID registered in the handling history to the selecting unit 17 described below. If "absent" is registered for the continuity of the handling history, it can be estimated that it is no need to allow the same operator as the operator who took charge of the inquiry previous time continuously. In this case, the receiving unit 15 outputs the membership number, the type code, and the position information included in the inquiry to the identifying unit 16 described below, in order to select an operator who takes charges of this time inquiry.

As an example, a case is supposed where an inquiry including a membership number of "123456789" and a type code of "1110" is received from the portable terminal 30. In this case, although a handling history having the same number as the membership number "123456789" included in the inquiry is registered in the handling history storage unit 12 indicated in FIG. 4, the type code "1110" received this time and the type code of the handling history "1010" do not match. In other words, the previous time inquiry is support for interpretation for shopping price negotiation, whereas this time inquiry is related to illness, where the details of the previous time inquiry are not linked to this time inquiry. An operator is therefore selected by the selecting unit 17 described below, out of all the operators who belong to the help desk.

The identifying unit 16 is a processing unit that identifies a language used in an area stored in the itinerary storage unit 13a in association with the membership number whose inquiry was received by referring to the used language storage unit 13b. As an example, the identifying unit 16 identifies a language used in the current area of stay corresponding to the position information included in the inquiry and further identifies a language used in an area stored in the itinerary storage unit 13a in association with the membership number whose inquiry was received as scheduled to stay next. An area where a user is scheduled to stay next following the current area of stay may be called the "next area of stay" below.

To describe this, the identifying unit 16 identifies the first language as the used language of the current area of stay corresponding to the position information included in the inquiry by referring to the used language storage unit 13b. Subsequently, any operator who can handle the first language of the current place of stay is narrowed down by the selecting unit 17 described below. If there is no operator who can handle the first language of the current area of stay, the identifying unit 16 identifies the second language corresponding to the current area of stay by referring to the used language storage unit 13b. Any operator who can handle the second language of the current area of stay is narrowed down by the selecting unit 17 described below. If there is still no operator who can handle the second language of the current area of stay, the identifying unit 16 identifies the third language corresponding to the current area of stay by referring to the used language storage unit 13b. Subsequently, any operator who can handle the third language of the current area of stay is narrowed down by the selecting unit 17 described below.

Thus, the identifying unit 16 extends the range of the used language from the first language to the third language until any operator who can handle the used language is narrowed down by the selecting unit 17 described below, thereby allowing the selecting unit 17 described below to narrow down any operator who can handle the used language of the current area of stay. To what area classification 2 out of the area classification stored in the itinerary storage unit 13a the position information included in the inquiry corresponds can be identified by a known technique. For example, the identifying unit 16 can identify to what area classification 2 the position information corresponds by referring to data in which the ranges of latitude and longitude are associated by area classification 2.

Subsequently, if a plurality of operators who can handle the used language of the current area of stay are narrowed down, whether "present" is associated with the continuity of the type code included in the inquiry is determined by the determining unit 18 described below. Only when "present" is associated with the continuity of the type code included in the inquiry, the identifying unit 16 identifies the next area of stay in the itinerary stored in the itinerary storage unit 13a in association with the membership number included in the inquiry. In addition to this, the identifying unit 16 identifies the used language corresponding to the next area of stay by referring to the used language storage unit 13b.

Although a case where the language used in the current area of stay is identified from the position information measured by the GPS receiver incorporated into the portable terminal 30 is exemplified here, the disclosed device is not limited thereto. For example, the disclosed device can also identify the "language used in the current area of stay" from a date and time when the inquiry was made and an itinerary. In other words, because itineraries are stored in the itinerary storage unit 13a by user, if a date and time when the inquiry was received can be identified, the disclosed device can identify the language used in the current area of stay from the itinerary in which scheduled dates and times and areas of stay are associated with each other. A latitude and a longitude at which the user is actually present are not always obtained.

The selecting unit 17 is a processing unit that selects an operator who can handle the language identified by the identifying unit 16 from the handling language storage unit 14a. To describe this, when the used language of the current area of stay is identified by the identifying unit 16, the selecting unit 17 narrows down any operator who can handle the used language of the current area of stay as candidates for an operator in charge out of the operators stored in the handling language storage unit 14a. If only one operator has been narrowed down, there is no choice other than the operator. The selecting unit 17 then selects the operator narrowed down by the used language of the current area of stay as the operator in charge. As might be expected, it is needless to say that when narrowing down candidates for the operator in charge, the narrowing down is targeted for attended operators.

If a plurality of candidates for the operator in charge have been narrowed down, the selecting unit 17 allows the determining unit 18 described below to determine whether "present" is associated with the continuity of the type code included in the inquiry. If "present" is associated with the continuity of the type code included in the inquiry, the used language corresponding to the next area of stay is identified by the identifying unit 16. In this case, the selecting unit 17 refers to the handling language storage unit 14a to select an operator who can handle the used language of the next area of stay out of the candidates for the operator in charge as the operator in charge. If there are a plurality of operators who can handle the used language of the next area of stay, the selecting unit 17 selects an operator with the highest level of the used language or an operator with the highest level of a skill in the type code of the inquiry.

If "absent" is associated with the continuity of the type code included in the inquiry, it can be estimated that there is no need to allow the same operator as the operator who took charge of the inquiry previous time to take charge of the inquiry continuously. The selecting unit 17 then refers to the skill storage unit 14b to select an operator with the highest level of the skill in the type code of the inquiry out of the candidates for the operator in charge as the operator in charge.

If "present" is registered for the continuity of the handling history having the same membership number and type code as the membership number and type code included in the inquiry, it can be estimated that it is appropriate to allow the same operator as the operator who took charge of the inquiry previous time to take charge of the inquiry continuously. The selecting unit 17 then selects the operator who is registered in the handling history, that is, the operator who took charge of the inquiry of the same type code previous time as the operator in charge.

For example, a case is supposed where the member ship number is "123456789," the type code is "1110," and the position information indicates "London, the United Kingdom," which are included in an inquiry received from the portable terminal 30. In this case, "English" corresponding to the current area of stay "London, the United Kingdom" is identified as the used language out of the used languages stored in the used language storage unit 13b by the identifying unit 16. Out of the operators with operator IDs of "OP001" to "OP003" stored in the handling language storage unit 14a indicated in FIG. 7, the operator with an operator ID of "OP001" and the operator with an operator ID of "OP002" who can handle English are narrowed down as the candidates for the operator in charge by the selecting unit 17. In this example, a plurality of candidates for the operator in charge are narrowed down, and as indicated in FIG. 3, "present" in continuity is associated with the type code "1110" included in the inquiry, that is, "guidance on local hospitals and support for conversation with medical staff." As indicated in FIG. 5, then, out of the itinerary stored in the itinerary storage unit 13a in association with the membership number "123456789" included in the inquiry, the next area of stay "Geneva, Switzerland" following the current area of stay "London, the United Kingdom" is identified by the identifying unit 16. Furthermore, out of the used languages stored in the used language storage unit 14a , the used language "French" corresponding to the next area of stay "Geneva, Switzerland" is identified by the identifying unit 16. In addition to this, out of the operators with operator IDs of "OP001" and "OP002," the operator with an operator ID of "OP001" who can handle the used language "French" of the next area of stay is selected as the operator in charge by the selecting unit 17. In this way, even when the user makes an inquiry about support for conversation with medical staff again in Geneva, Switzerland, circumstances can be grasped through this time inquiry, and the operator with an operator ID of "OP001" who can handle French can be assigned as the operator in charge.

After thus selecting the operator, the selecting unit 17 directs the operator terminal 50 used by the operator selected as described above to establish a call connection with the inquiring portable terminal 30.

Although a case where the current area of stay of the user is "London, the United Kingdom" and the next area of stay is "Geneva, Switzerland" is exemplified in the above example, the languages used in different areas in an itinerary may be same. For example, when a user is scheduled to move from the United Kingdom, which is the current area of stay, to the United States, which is the next area of stay, an operator who can handle English is selected. In other words, when selecting an operator who can handle languages used in the current area of stay and the next area of stay, the disclosed device does not necessarily select an operator who can handle a plurality of languages and may select an operator who can handle one language.

The determining unit 18 is a processing unit that determines whether the continuity of the type code included in the inquiry received from the portable terminal 30 using the continuity storage unit 11. As an example, the determining unit 18 determines whether, when a plurality of candidates for the operator in charge have been narrowed down, "present" is associated with the continuity of the type code included in the inquiry out of the continuity of the type codes stored in the continuity storage unit 11. The determining unit 18 then allows the identifying unit 16 to identify the next place of stay only when "present" is associated with the continuity of the type code included in the inquiry. The reason why the identification of the next place of stay by the identifying unit 16 is thus limited to the case where the continuity is "present" is to prevent a situation where a shortage in versatile operators who have mastered many languages occurs, because of frequent assignment of the versatile operators.

The registering unit 19 is a processing unit that registers the handling history received from the operator terminal 50 in the handling history storage unit 12. As an example, the registering unit 19 registers "membership number," "date and time," "handling operator," "type code," "the presence or absence of continuity," "handling details," or the like received from the operator terminal 50 in the handling history storage unit 12.

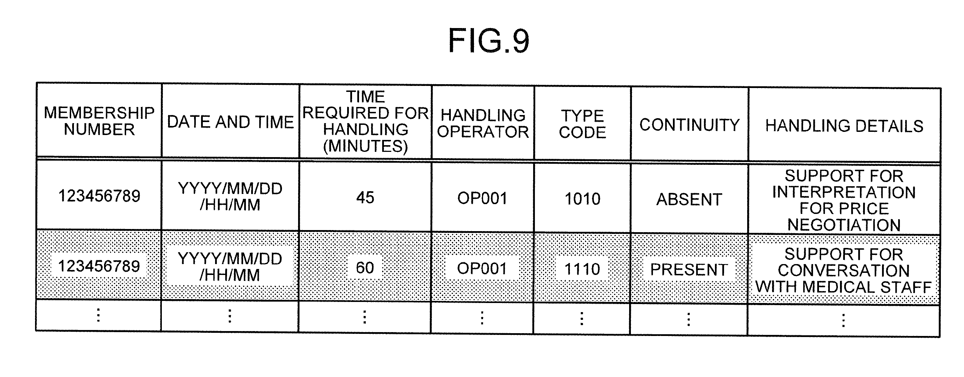

FIG. 9 is a diagram indicating a registration example of a handling history. The example of FIG. 9 exemplifies a case where the registering unit 19 has received a handling history including a membership number of "123456789," a date and time of "YYYY/MM/DD/HH/MM," a time for handling of "45," a handling operator of "OP011," a type code of "1110," a continuity of "present," and handling details of "support for conversation with medical staff." When the handling history received from the operator terminal 50 has been thus registered by the registering unit 19, the handling history storage unit 12 changes from the state indicated in FIG. 4 to the state indicated in FIG. 9. When the handling history storage unit 12 is in the state indicated in FIG. 9, upon receiving an inquiry including a membership number of "123456789" and a type code of "1110" from the portable terminal 30 thereafter, the operator with an operator ID of "OP001" is selected by the selecting unit 17.

Various types of integrated circuits and electronic circuits may be used for the receiving unit 15, identifying unit 16, the selecting unit 17, the determining unit 18, and the registering unit 19. Examples of the integrated circuits may include an application specific integrated circuit (ASIC). Examples of the electronic circuits may include a central processing unit (CPU) and a micro processing unit (MPU).

### Flow of Processing

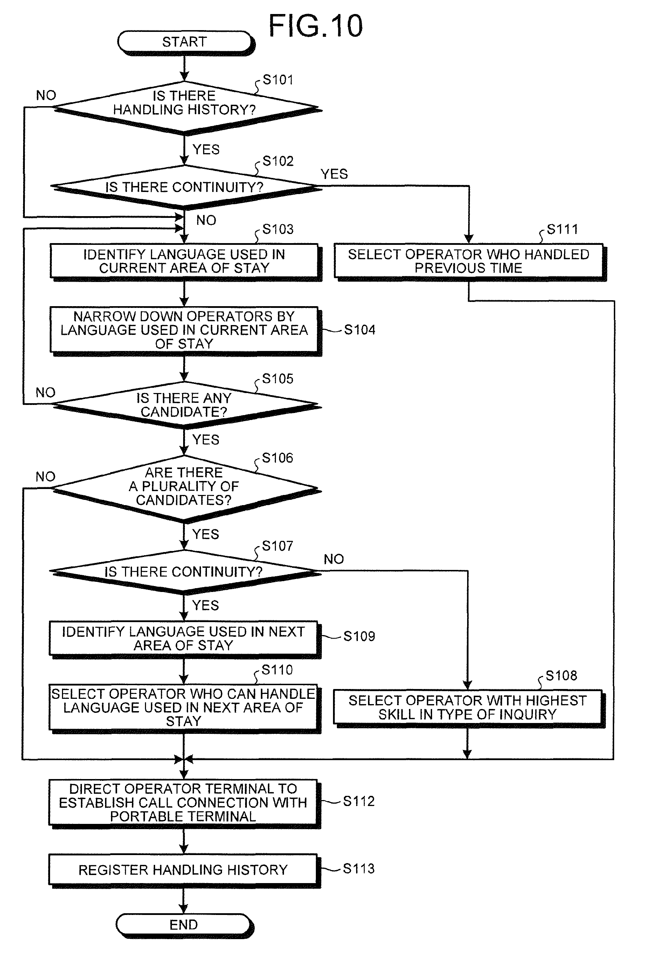

Described next is the flow of processing of the operator selecting device according to the present embodiment. FIG. 10 is a flowchart indicating the procedure of operator selecting processing according to the first embodiment. This operator selecting processing is processing executed repeatedly so long as the power of the operator selecting device 10 is turned on, and the processing is started upon receiving an inquiry of a user from the portable terminal 30.

As indicated in FIG. 10, the receiving unit 15 determines whether there is a handling history having the same membership number and type code as the membership number and type code included in the inquiry received from the portable terminal 30 in the handling history storage unit 12 (Step S101). If the handling history having the same membership number and type code is absent in the handling history storage unit 12 (No at Step S101), the flow moves to the processing of Step S103.

If the handling history having the same membership number and type code is present in the handling history storage unit 12 (Yes at Step S101), the receiving unit 15 further determines whether "present" is registered in the continuity of the handling history (Step S102).

If "absent" is registered in the continuity of the handling history (No at Step S102), the identifying unit 16 identifies the used language of the current area of stay corresponding to the position information included in the inquiry by referring to the used language storage unit 13b (Step S103).

Subsequently, the selecting unit 17 narrows down any operators who can handle the used language of the current area of stay as candidates for an operator in charge out of the operators stored in the handling language storage unit 14a (Step S104).

Until the operator who can handle the used language is narrowed down (No at Step S105), the identifying unit 16 and the selecting unit 17 execute the processing below repeatedly. In other words, the identifying unit 16 extends the range of use stepwise from the first language to the second language or from the first language to the third language to identify the used language (Step S103). In addition to this, the selecting unit 17 narrows down operators who can handle the used language of the current area of stay for which the range of use has been extended stepwise (Step S104).

Thereafter, if candidates for the operator in charge are present and if a plurality of candidates have been narrowed down (Yes at Step S105 and Yes at Step S106), the determining unit 18 executes the processing below. In other words, the determining unit 18 determines whether "present" is associated with the continuity of the type code included in the inquiry out of the continuity of the type codes stored in the continuity storage unit 11 (Step S107). If only one candidate for the operator in charge has been narrowed down (No at Step S106), there is no choice other than the operator, and the operator narrowed down by the used language of the current area of stay is selected as the operator in charge without any change.

If "absent" is associated with the continuity of the type code included in the inquiry (No at Step S107), it can be estimated that there is no need to allow the same operator as the operator who took charge of the inquiry previous time to take charge of the inquiry continuously. The selecting unit 17 then refers to the skill storage unit 14b to select an operator with the highest level of the skill in the type code of the inquiry out of the candidates for the operator in charge (Step S108).

If "present" is associated with the continuity of the type code included in the inquiry (Yes at Step S107), the identifying unit 16 executes the processing below. In other words, the identifying unit 16 identifies the next area of stay out of the itinerary stored in the itinerary storage unit 13a in association with the membership number included in the inquiry, and in addition, identifies the used language corresponding to the next area of stay by referring to the used language storage unit 13b (Step S109).

The selecting unit 17 refers to the handling language storage unit 14a to select an operator who can handle the used language of the next area of stay out of the candidates for the operator in charge as the operator in charge (Step S110).

If "present" is registered in the continuity of the handling history having the same membership number and type code as the membership number and type code included in the inquiry (Yes at Step S102), it can be estimated as follows; in other words, it can be estimated that it is appropriate to allow the same operator as the operator who took charge of the inquiry previous time to take charge of the inquiry continuously. The selecting unit 17 then selects the operator who is registered in the handling history, that is, the operator who handled the inquiry of the same type code previous time as the operator in charge (Step S111).

Thereafter, the selecting unit 17 directs the operator terminal 50 used by the operator selected by the processing of the above Step S108, Step S110, or Step S111 to establish a call connection with the inquiring portable terminal 30 (Step S112). The registering unit 19 registers the handling history including the membership number, the date and time, the time for handling, the handling operator, the type code, the presence or absence of continuity, handling details, or the like received from the operator terminal 50 in the handling history storage unit 12 (Step S113) to end the processing.

### Effects of First Embodiment

As described above, the operator selecting device 10 according to the present embodiment, when the inquiry is received from the user, identifies a language group that is expected to be used from the itinerary of the user and assigns an operator who can handle the identified language group as a person in charge of the inquiry. As a result, the operator selecting device 10 according to the present embodiment can allow the same operator to handle the inquiry from the user even when the user takes an itinerary making a tour of a plurality of areas. In the operator selecting device 10 according to the present embodiment, therefore, the user does not need to explain the details of a consultation about which the user held before moving between areas to an operator again, or a handling task does not need to be taken over from one operator to another. Consequently, the operator selecting device 10 according to the present embodiment can support a solution to trouble smoothly.

Furthermore, the operator selecting device 10 according to the present embodiment determines whether continuity corresponding to the type of the inquiry received from the portable terminal 30 out of the presence or absence of the continuity of inquiries stored in the continuity storage unit 11 is present. In addition to this, if it is determined that the continuity is present, the operator selecting device 10 according to the present embodiment executes processing identifying the language used in the next area of stay or processing selecting the operator who can handle the language. As a result, the operator selecting device 10 according to the present embodiment can assign versatile operators who have mastered many languages most efficiently. The operator selecting device 10 according to the present embodiment can therefore prevent a situation where a shortage in versatile operators who have mastered many languages occurs.

### Second Embodiment

An embodiment on the disclosed device has been described. The present invention may be embodied in various different forms apart from the above embodiment. The following describes another embodiment included in the present invention.

### Modification of Handling Language Storage Unit

For example, although in the above first embodiment a case is exemplified where a level value that indicates the ability to handle conversation using a language is stored in the handling language storage unit 14a, the disclosed device is not limited thereto. For example, the disclosed device may store therein handling availability that indicates the availability of handling a language for each language in place of the level value.

### Modification of Skill Storage Unit

Although in the above first embodiment a case is exemplified where a level value that indicates the ability of an operator to handle an inquiry is stored in the skill storage unit 14b, the disclosed device is not limited thereto. For example, the disclosed device may store handling availability that indicates the availability of handling an inquiry of a type code for each type code in place of the level value.

### Application 1 of Identifying Unit

Although in the above first embodiment a case is exemplified where a language used in the current area of stay is identified, and then, a language used in the next area of stay is identified, the disclosed device is not limited thereto. For example, the disclosed device may identify a language group used in all the areas stored in the itinerary storage unit 13a in association with the membership number for which the inquiry was received by referring to the used language storage unit 13b. In this case, the disclosed device may select an operator who can handle the language group used in all the areas.

### Application 2 of Identifying Unit

Although in the above first embodiment a case is exemplified where a language group used in the current area of stay and the next area of stay is identified, the disclosed device is not limited thereto. For example, the disclosed device may identify a language group used in the current area of stay and the past area of stay.

### Limitation Cancellation of Inquiry

Although in the above first embodiment a case is exemplified where the portable terminal 30 makes an inquiry of the membership number, the type code, and the position information collectively, the portable terminal 30 does not necessarily need to transmit the type code and the position information. For example, because in the disclosed device itineraries are stored in the itinerary storage unit 13a by user, a language used in the current and next areas of stay can be identified by comparing a date and time when the inquiry was received with a scheduled date and time, if the date and time when the inquiry was received can be identified, even without position information in which a user is actually present. Although in the above first embodiment a case is exemplified where the same operator is assigned for the inquiry of the type code whose continuity is "present" out of inquiries, the disclosed device is not limited thereto. For example, the disclosed device may assign the same operator regardless of the presence or absence of continuity to increase the number of contact between the user and the operator, thereby improving a feeling of trust of the user against the operator.

### Scope of Application

Although in the above first embodiment a case is exemplified where a talk between the portable terminal 30 and the operator terminal 50 is established through an IP telephone, the terminal used by the user is not always the portable terminal. For example, the disclosed device may also be applied to a case where a talk between a user terminal used by the user and the operator terminal 50 is connected through dial-up. For example, the disclosed device may be interposed as an automatic call distributor (ACD) that controls a switchboard receiving a call transmitted from the user terminal, thereby assign an inquiry from the user by telephone to the operator terminal 50 using the switchboard.

### Distribution and Integration

Also, each illustrated component of each device is not always requested to be physically configured as illustrated in the drawings. In other words, a specific form of the distribution and integration of the device is not limited to the illustrated one, and the device may be configured through functional or physical distribution and integration in an arbitrary unit depending on various loads and use conditions. For example, the receiving unit 15, the identifying unit 16, the selecting unit 17, the determining unit 18, or the registering unit 19 may be connected as an external device of the operator selecting device 10 through a network. The receiving unit 15, the identifying unit 16, the selecting unit 17, the determining unit 18, or the registering unit 19 may be included in another device and are connected through a network to cooperate, thereby achieving the functions of the operator selecting device 10.

### Operator Selecting Program

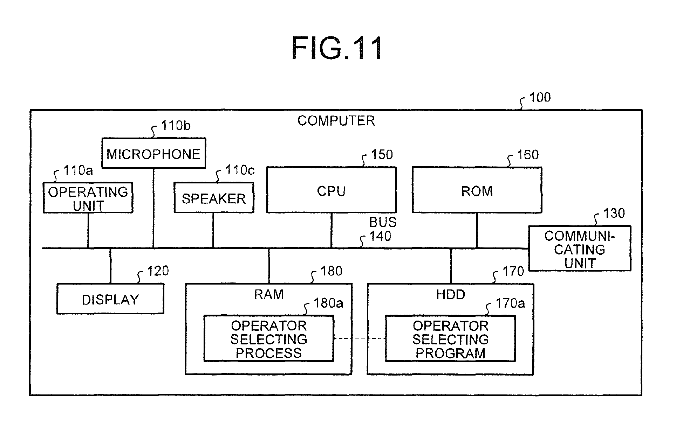

The various types of processing described in the above embodiments can be achieved by executing a program prepared in advance on a computer such as a personal computer and a workstation. The following describes an example of a computer that executes an operator selecting program having the same functions as the above embodiments, using FIG. 11.

FIG. 11 is a diagram for describing an example of a computer that executes the operator selecting program according to the first embodiment and the second embodiment. As illustrated in FIG. 11, this computer 100 includes an operating unit 110a, a microphone 110b, a speaker 110c, a display 120, and a communicating unit 130. The computer 100 further includes a CPU 150, a ROM 160, an HDD 170, and a RAM 180. The units 110 to 180 are connected through a bus 140.

As illustrated in FIG. 11, the HDD 170 stores therein in advance an operator selecting program 170a that exerts the same functions as the receiving unit 15, the identifying unit 16, the selecting unit 17, the determining unit 18, and the registering unit 19 illustrated in the above first embodiment. The operator selecting program 170a may be appropriately integrated or separated in the same manner as the components, that is, the receiving unit 15, the identifying unit 16, the selecting unit 17, the determining unit 18, and the registering unit 19 illustrated in FIG. 2. Namely, all data illustrated as stored in the HDD 170 does not always have to be stored in the HDD 170, and it is sufficient if data for each process is stored in the HDD 170.

The CPU 150 reads the operator selecting program 170a out of the HDD 170 and develops it into the RAM 180. As illustrated in FIG. 11, thereby, the operator selecting program 170a functions as an operator selecting process 180a. The operator selecting process 180a develops various types of data read out of the HDD 170 into their own areas appropriately assigned on the RAM 180, and based on the developed various types of data, various types of processing are executed. The operator selecting process 180a includes the processing executed by the receiving unit 15, the identifying unit 16, the selecting unit 17, the determining unit 18, and the registering unit 19 illustrated in FIG. 2, for example, the processing indicated in FIG. 10. Furthermore, all the processing units illustrated as virtually realized on the CPU 150 do not always have to operate on the CPU 150, and it is sufficient if a processing unit for each process is virtually realized.

Incidentally, operator selecting program 170a does not always have to be stored in the HDD 170 or the ROM 160 from the beginning. For example, the program is stored in "portable physical media" such as a flexible disk, that is, an FD, a CD-ROM, a DVD disk, an optical disk, and an IC card, which are inserted into the computer 100. The computer 100 may acquire the program from the portable physical media to execute it. The program may be stored in another computer or a server device connected to the computer 100 through a public network, the Internet, a LAN, a WAN, or the like, and the computer 100 may acquire the program therefrom and execute it.

### [Explanation of Reference]

- 1: Help desk system
- 10: Operator selecting device
- 11: Continuity storage unit
- 12: Handling history storage unit
- 13a: Itinerary storage unit
- 13b: Used language storage unit
- 14a: Handling language storage unit
- 14b: Skill storage unit
- 15: Receiving unit
- 16: Identifying unit
- 17: Selecting unit
- 18: Determining unit
- 19: Registering unit
- 30: Portable terminal
- 50: Operator terminal

## Claims

1. An operator selecting device comprising:
an itinerary storage unit that stores therein areas that a user is scheduled to visit in association with each user identifying information that identifies the user;
a used language storage unit that stores therein a language used in an area in association with each area;
a handling language storage unit that stores therein a language an operator can handle in association with each operator;
an identifying unit that identifies, when an inquiry including user identifying information is received from a terminal used by a user, a language used in an area that the user stored in the itinerary storage unit in association with the user identifying information is scheduled to visit thereafter by referring to the used language storage unit; and
a selecting unit that selects an operator who can handle a language used in the current area of stay of a user and a language identified from the handling language storage unit by the identifying unit.

2. The operator selecting device according to claim 1, further comprising:
a continuity storage unit that stores therein presence or absence of continuity of an inquiry in association with each type of the inquiry; and
a determining unit that determines whether continuity corresponding to the type of an inquiry received from the terminal out of the presence or absence of the continuity of inquiries stored in the continuity storage unit is present, wherein
the identifying unit, when the determining unit determines that the continuity is present, identifies a language used in an area that the user stored in the itinerary storage unit in association with the user identifying information is scheduled to visit thereafter.

3. An operator selecting program that causes a computer to execute processing comprising:
identifying, when an inquiry including user identifying information that identifies a user is received from a terminal used by the user, a language used in an area that the user stored in an itinerary storage unit that stores therein areas that the user is scheduled to visit in association with each user identifying information, in association with the user identifying information included in the inquiry is scheduled to visit thereafter by referring to a used language storage unit that stores therein a language used in an area in association with each area; and
selecting an operator who can handle a language used in the current area of stay of the user and a language used in an area that the user is scheduled to visit thereafter from a handling language storage unit that stores therein a language the operator can handle in association with each operator.

4. An operator selecting method that causes a computer to execute processing comprising:
identifying, when an inquiry including user identifying information that identifies a user is received from a terminal used by the user, a language used in an area that the user stored in an itinerary storage unit that stores therein areas that the user is scheduled to visit in association with each user identifying information, in association with the user identifying information included in the inquiry is scheduled to visit thereafter by referring to a used language storage unit that stores therein a language used in an area in association with each area; and
selecting an operator who can handle a language used in the current area of stay of the user and a language used in an area that the user is scheduled to visit thereafter from a handling language storage unit that stores therein a language the operator can handle in association with each operator.
